# EUROPEAN PATENT SPECIFICATION

(11) **EP 3 555 493 B1**
(45) Date of publication and mention of the grant of the patent: **29.10.2025**
(21) Application number: 17818623.5
(22) Date of filing: 30.11.2017
(51) Int. Cl.: F16D 55/228

(54) **PROCESS FOR MAKING A CALIPER BODY OF A BRAKE CALIPER**
VERFAHREN ZUR HERSTELLUNG EINES SATTELKÖRPERS EINES BREMSSATTELS
PROCÉDÉ DE FABRICATION D'UN CORPS D'ÉTRIER D'UN ÉTRIER DE FREIN

(30) Priority: 19.12.2016 IT 201600128182
(43) Date of publication of application: 23.10.2019
(73) Proprietor: BREMBO S.p.A., 24035 Curno (BERGAMO) (IT)
(72) Inventor: CRIPPA, Cristian, I-24035 Curno (BERGAMO) (IT); POLVARA, Paolo, I-24035 Curno (BERGAMO) (IT)
(74) Representative: Crippa, Paolo Ernesto
(86) International application number: PCT/IB2017/057518
(87) International publication number: WO 2018/116035

(56) References cited:
- JP-A- 2001 113 351
- JP-A- 2008 309 181
- KR-B1- 100 410 861
- US-A1- 2003 037 901

## Description

The present invention relates to a process for making a caliper body of a brake caliper for a motor vehicle, and further relates to a caliper body made by such process and a brake caliper comprising such body.

In the prior document JP2013139057A a system is shown for making a brake caliper according to the background art, by means of the shaping of a metal material.

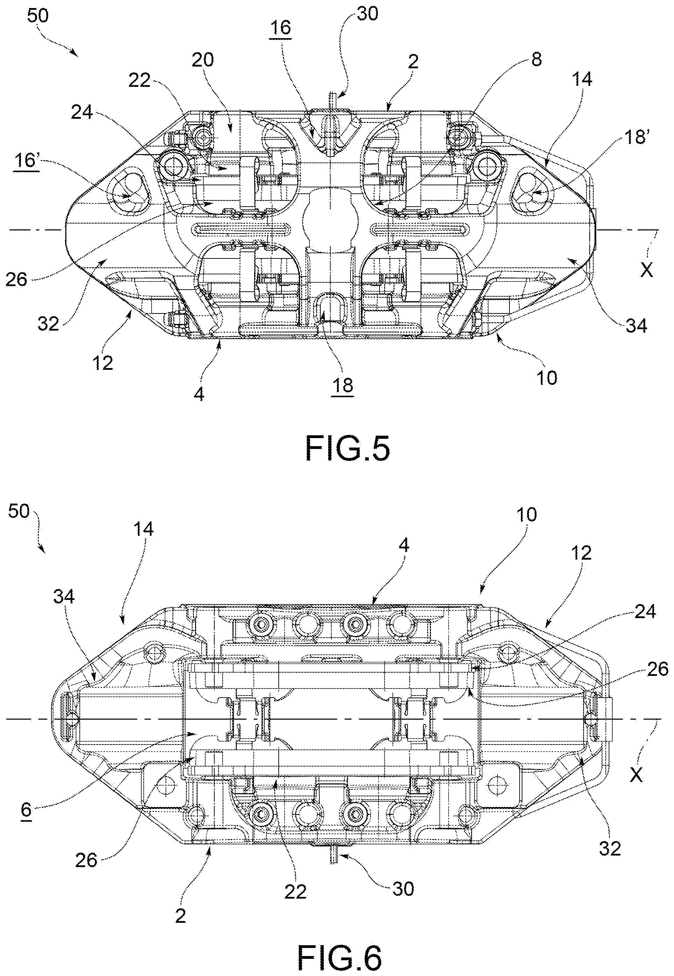

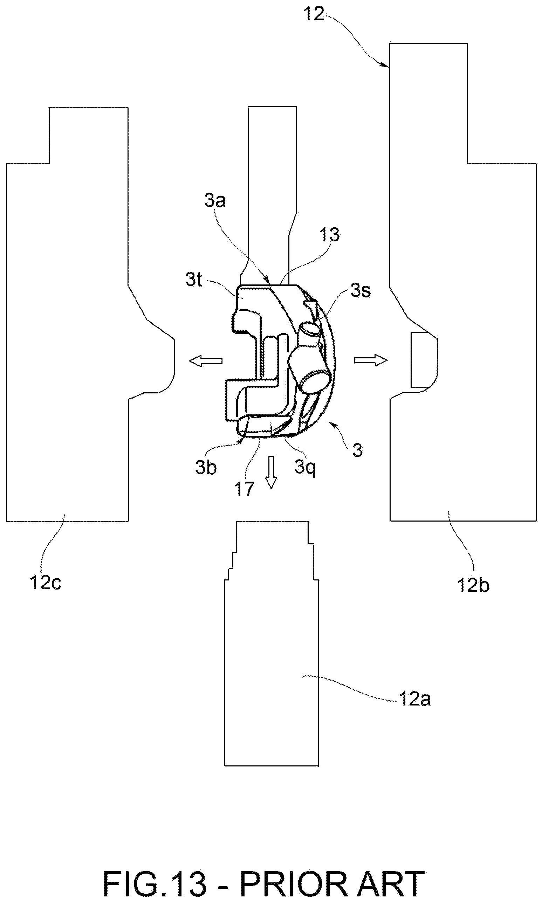

More precisely, in Figure 5 of such document (shown again as Figure 13 in the present description), it may be observed that at the opening of the half-molds (12a, 12b, 12c) the raw of the brake caliper (3) comprises a substantial riser which extends from a side surface (3a) of such caliper, towards the channel (13) by means of which the metal material was fed.

The drawbacks associated with such set-up include, purely by way of explanation, the need to carry out post-processing operations aimed at removing the riser and at refining the side surface, since it remains visible in the use of the caliper, the presence of a residual porosity right at such side of the caliper, and the waste of a large amount of metal.

In addition, the prior documents JP2001/113351A, KR20020085285A, WO 2011/061593 A1, WO 2012/0160479 A1 and WO 2010/131273 A1 show other systems and methods for making monolithic bodies.

More precisely, document WO 2011/061593 A1 shows a method for making hollow bodies by employing a disposable ceramic core which reproduces the contours of at least one internal cavity of such body.

Document WO 2012/0160479 A1 instead shows a system for injecting a semi-solid material into a mold, characterized in that an actuator device selectively works on a thrust piston to inject the semi-solid material into the mold.

Finally, document WO 2010/131273 A1 shows a process for manufacturing a brake component by means of a first material in sinterable granular form, and a second binder material capable of partially separating the granules of the first material. Such first and second material are mixed together in determined proportions and then shaped to make an insert, the latter being then anchored stably to a body of the brake component by infiltrating a third material into the cavities which have been created in the first material sintering process.

The present invention belongs to the aforesaid context and offers to solve the aforesaid drawbacks by virtue of a manufacturing process in which the material in semi-solid form is introduced into the mold from a position which - in use - remains partially hidden from view, where the unwanted porosities are concentrated, and through a path inside the mold which is shorter than in the systems of the background art.

Such object is achieved by means of a method according to claim 1, by means of a caliper body according to claim 16, and by means of a brake caliper according to claim 17. The dependent claims show preferred embodiments of the invention.

The object of the present invention will now be described in detail, with the aid of the tables, provided by way of explanation and not by way of limitation, in which:
- Figure 1 is a schematic view of a longitudinal section through a mold which can be used in the method, object of the present invention, according to a possible constructive form;
- Figures 2, 3 respectively show a side view and a perspective view of a raw body, according to a possible variant;
- Figures 4, 5, 6, 7 respectively show a perspective view, a top plan view, a bottom plan view, and a front view of an assembled brake caliper, according to an embodiment, employing the caliper body in one piece according to a variant of the present invention;
- Figure 8 shows a caliper body according to another embodiment, in which such body is made by at least two pieces, or half-bodies, coupled with one another;

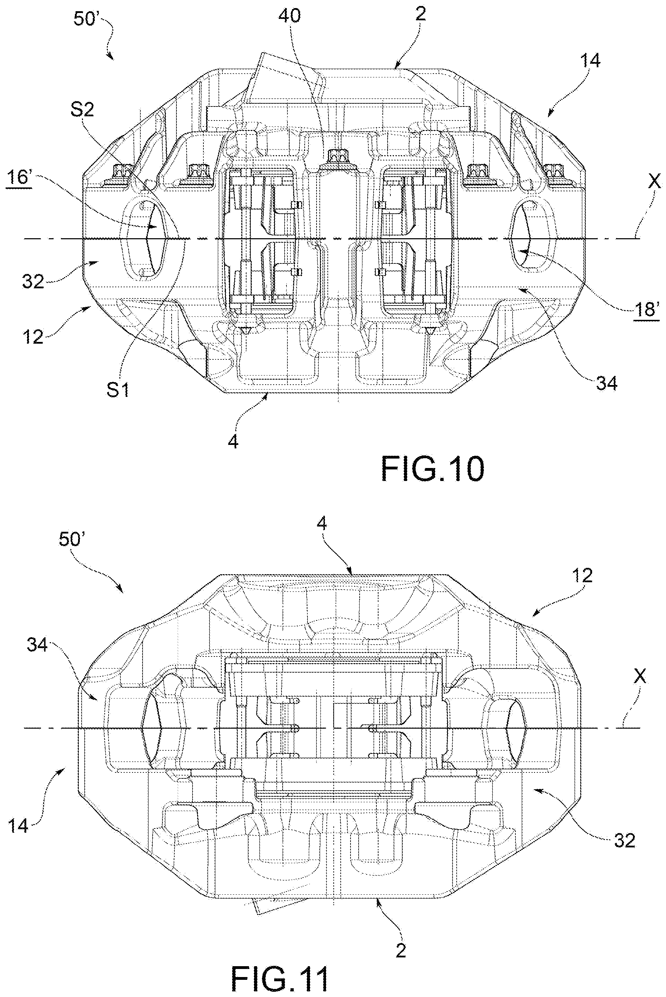

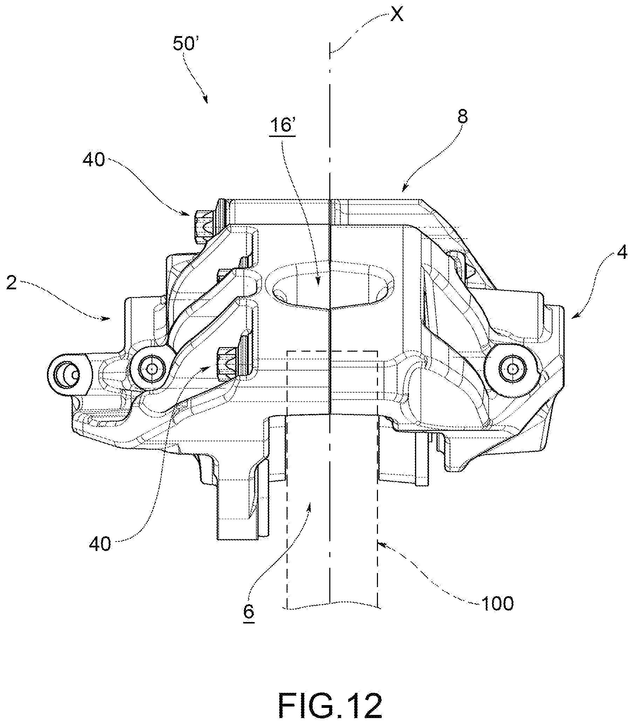

- Figures 9, 10, 11, 12 respectively show a perspective view, a top plan view, a bottom plan view, and a front view of an assembled brake caliper, according to a different embodiment, employing the caliper body according to Figure 8;
- Figure 13 corresponds to Figure 5 of the prior document JP2013139057A cited above.

With reference to the aforesaid tables, with reference numerals 10, 10', a caliper body comprising a couple of opposite side portions 2, 4 was identified in the totality thereof.

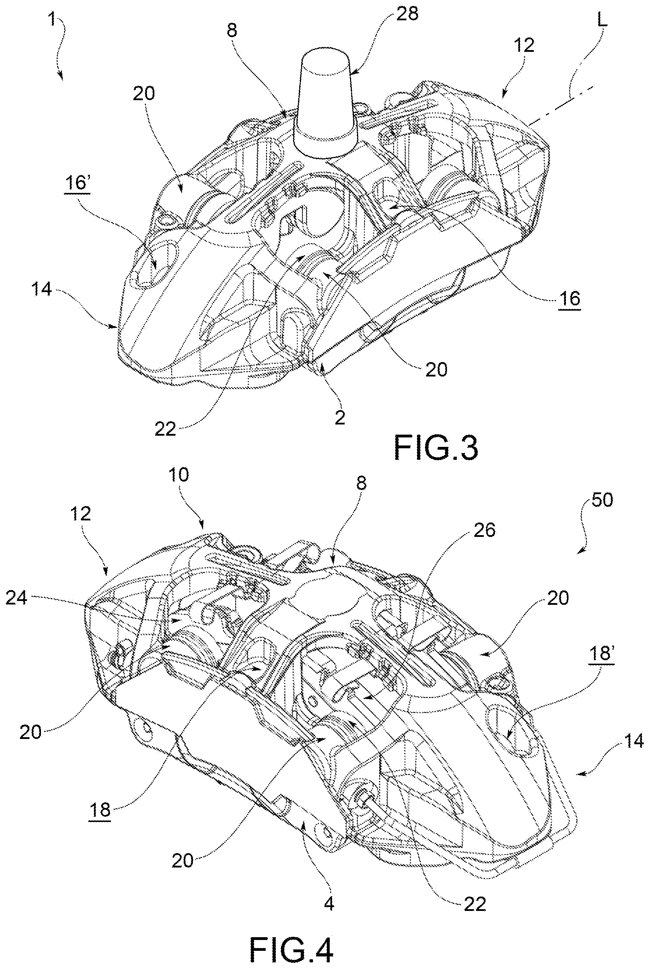

According to a first embodiment (for example, see Figure 4), the caliper body 10 is made in one piece, i.e. substantially as a single piece.

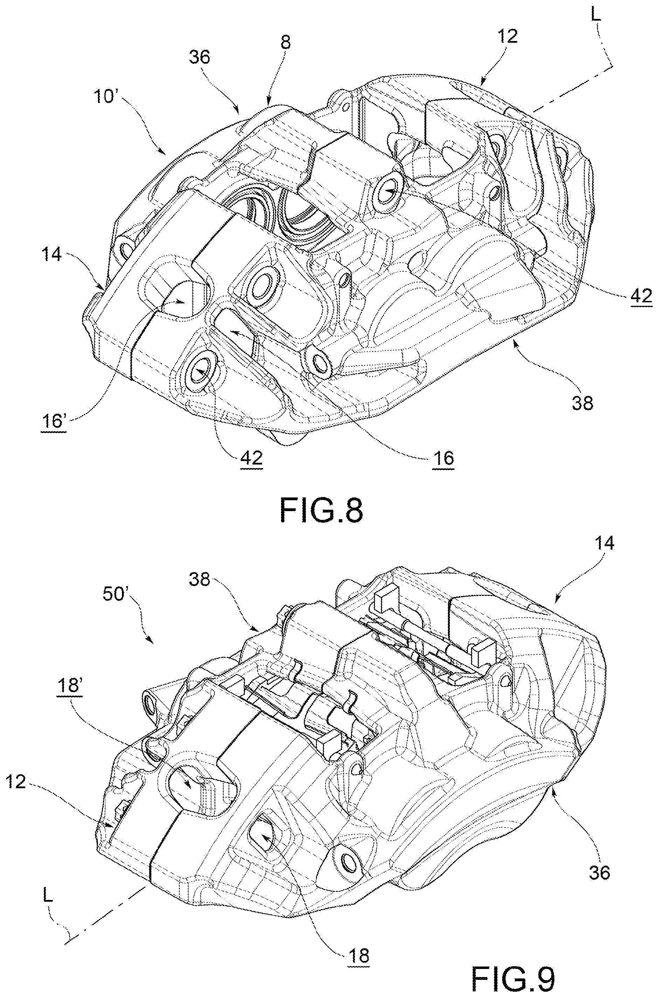

According to another embodiment, the caliper body 10' is made of at least two pieces, or half-bodies 36, 38, joined one another by force and/or shape (Figure 8, by way of explanation).

According to an embodiment, the caliper body 10' comprises mechanical locking means between the half-bodies 36, 38, for example of the threaded type.

According to a variant, the mechanical locking means comprise a plurality of screws 40 (advantageously captive screws), in particular, through through-seats 42 delimited by a half-body 38 and engaged in blind holes of the other half-body 36.

In the variants shown, the side portions 2, 4 have a generally elongated shape in the longitudinal direction L.

According to a further variant, the side portions 2, 4 face and/or substantially mirror one another.

According to another further variant, a side portion 2, 4 may comprise means 30 for fastening the caliper body 10, 10' to a motor vehicle, for example in the form of a bracket or of a pivot protruding away from such body 10.

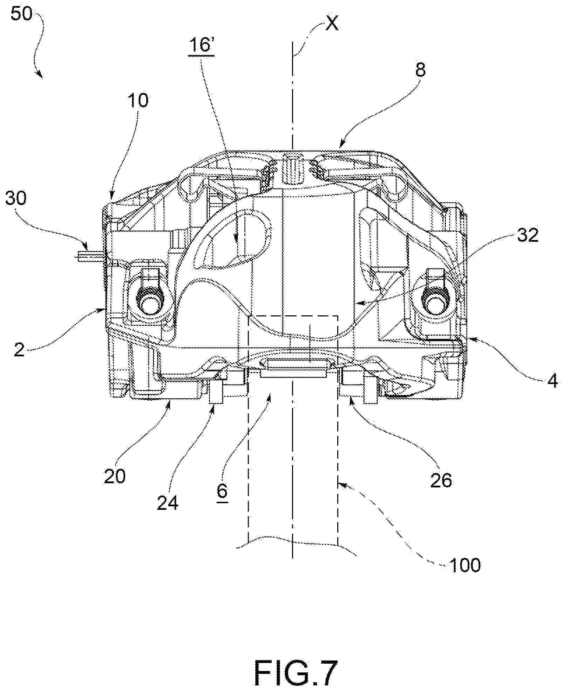

The side portions 2, 4 define therebetween an intermediate plane X (Figure 6) and delimit a housing space 6 for at least part of the braking surfaces of a disc brake 100, in a straddling arrangement of such body 10 on such brake 100. The disc brake 100 is only outlined in broken lines in Figure **7****.**

According to an embodiment, the half-bodies 36, 38 are joined by means of respective coupling surfaces S1, S2 which develop at least partially along or parallel to the intermediate plane X.

According to a further embodiment, coupling surfaces S1, S2 between the half-bodies 36, 38 develop at least partially through the intermediate plane X.

According to the invention, each side portion 2, 4 delimits one or more cylinders 20 configured to house one or more mobile pistons 22 for moving a support plate 24 for a friction material 26, with respect to the braking surfaces of the disc brake 100.

More precisely, the cylinders 20 face the housing space 6 and house mutually counterposed pistons 22, mobile towards and away from such space 6.

According to a variant, the at least one mobile piston 22 is housed in a translatable manner in the cylinder 20.

According to a preferred variant, the cylinders 20 are made as a single piece with the caliper body 10, 10'.

According to a preferred variant, the caliper body 10, 10' extends in longitudinal direction L between an inlet end 12 and an outlet end 14 of the disc brake 100.

It should be noted that, in the present description and in the annexed claims, expressions such as "inlet end" or "outlet end" refer to the position of elements and components of the caliper body 10, 10' which are respectively encountered first and last by a same portion of the disc brake 100, when the latter rotates, according to the rotation direction, in the normal travel direction of the vehicle.

Preferably, the longitudinal direction L is oriented in a circumferential direction of the disc brake 100.

The caliper body 10, 10' further comprises at least one connecting portion 8, 32, 34 extending over to join the side portions 2, 4. In the variant shown, such portion extends over the housing space 6.

According to a variant, the connecting portion 8, 32, 34 is made in one piece with the caliper body 10.

According to a further variant, the connecting portion 8, 32, 34 is made in at least two half-portions, each associated with a different half-body 36, 38.

According to a preferred variant, the connecting portion 8 is arranged in an intermediate position or substantially central between the aforesaid inlet 12 and outlet ends 14.

In the embodiments shown, the caliper body 10, 10' comprises at least one or at least two connecting portions 32, 34 in the end position, in particular at the inlet end 12 and/or at the outlet end 14.

The aforesaid objects are achieved by means of a method for making a caliper body 10, 10' of a brake caliper, advantageously according to any one of the variants shown above, comprising the steps of:
i) providing half-molds 102, 104, 106 jointly delimiting a mold cavity 108, of a shape substantially complementary to the caliper body 10, 10', adapted to receive a melted material in a semi-solid form (a melted semi-solid metal material for example according to the process disclosed into WO 2012/0160479 A1) by means of an access opening 110. According to the invention, such opening 110 is arranged so as to end at the connecting portion 8, 32, 34 (i.e. at at least one connecting portion, or at only one of such portions) in the vicinity of the intermediate plane X; said connecting portion extends over the housing space; and said connecting portion is made, alternatively in one piece with the caliper body; or in at least two half-portions, each associated with a different half-body of the caliper body;
ii) by means of the access opening 110, introducing the melted semi-solid material in the mold cavity 108 by injecting under pressure the semi-solid material;
iii) optionally, solidifying the material of step ii) in a raw body 1.

With reference to step i), the access opening 110 is oriented with respect to the raw body 1 so as to end at the connecting portion 8, 32, 34 and, advantageously, so as to lie at least partially in the intermediate plane X.

It should be noted that, in the present description and unless otherwise specified, the features of the raw body 1 will correspond to those of the caliper body 10, 10', and vice versa. As a result, the same reference numerals will correspond to identical or equivalent features of the caliper body and of the raw body.

According to the embodiment shown, the access opening 110 is arranged in an intermediate position or substantially central between the aforesaid ends 12, 14.

According to a further embodiment, the access opening 110 may be positioned at at least one of the connecting portions 32, 34, in the end position.

With reference to step i), such step may comprise a step of providing two or three half-molds 102, 104, 106, at least one or two of which is/are movable to open the mold cavity 108.

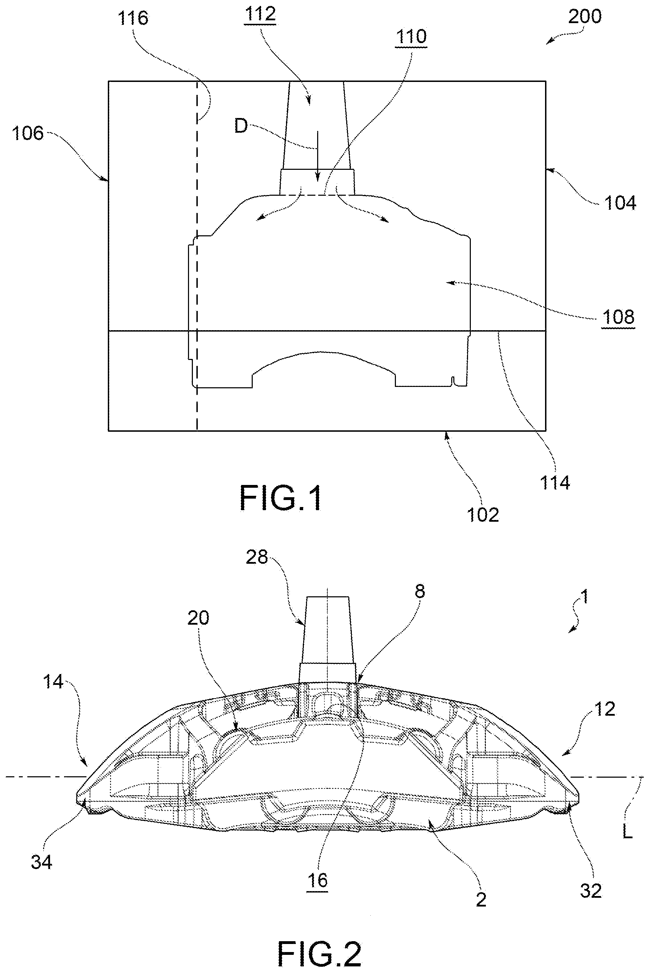

With reference, for example, to the variant outlined in Figure 1, the shaping device 200 may comprise only the two half-molds 102, 104, separated by a first separation plane 114 (extending from side to side, in a horizontal direction according to the orientation of the Figure).

According to a further variant, the shaping device 200 may comprise three half-molds 102, 104, 106; specifically, the third half-mold 106 (for example a carriage) may be separable from the other two half-molds 102, 104 by means of a second separation plane 116 - shown with a broken line.

In such second variant it is preferable that the separability of the two half-molds 102, 104 along the first separation plane 114 remains until the intersection with the second separation plane 116.

According to a particularly advantageous embodiment, the half-molds 102, 104, 106 comprise one or more internal protrusions which, arranged downstream of the access opening 110 in the transit direction D of the semi-solid material, form one or more constrictions of the transit section configured to increase the flow speed of such material along the connecting portion 8, 32, 34, so as to completely (and swiftly) fill the mold cavity 108 of both side portions 2, 4.

At the aforesaid protrusion or plurality thereof, the semi-solid material entering through the access opening 110 is in fact subjected to a forced passage therearound, so as to increase the speed thereof and to reach even the most remote portions of the mold cavity 108, without undergoing an appreciable cooling.

According to an advantageous variant, at the end of step iii), such one or more protrusions leave on the raw body 1 one or more body through-holes 16, 18, 16', 18' delimited by the solidified material, achieving structural lightenings of the caliper body 10, 10'.

With reference, for example, to Figure 3, in a variant, the raw body 1 of step iii) comprises at least one material appendix 28 of a shape complementary to an introduction or injection duct 112 proximal to the access opening 110 (for example, shown of a frustoconical shape). According to an advantageous embodiment, such appendix 28 is removed during step iv) - shown here below - to obtain the caliper body 10, 10'.

According to a variant, the method comprises an optional step iv) of extracting the raw body 1 from the mold cavity 108, and optionally of working such body to obtain the caliper body 10, 10', for example in one piece or in at least two half-bodies 36, 38 in accordance with different embodiments.

According to a further embodiment, step iv) comprises the step of extracting the raw body from the mold cavity, and optionally one or more steps of working the raw body 1 by means of chip removal operations, and/or by means of at least one cutting step.

The aforesaid objects are achieved by means of a caliper body 10, 10' of a brake caliper 50, 50', made (for example in one piece, or at least in two pieces) by means of the method according to any one of the preceding embodiments.

The aforesaid objects are finally achieved by means of a brake caliper 50, 50' comprising a caliper body 10, 10' according to the preceding variants, and a friction material 26 supported by a support plate 24 arranged at each side portion 2, 4.

Innovatively, the method of the present invention is suitable for brilliantly overcoming the drawbacks complained above.

More precisely, the relative orientation between the inlet of the material in semi-solid form and the caliper body, on the one hand, allows to obtain a component of at least equal structural strength with respect to the products of the background art.

On the other hand, the caliper body obtained by the present invention has localized porosity in areas not readily visible from the outside. For this reason, the post-processing and finishing operations are markedly reduced. Also the amount of unused solidified semi-solid material is drastically lower with respect to the systems of the background art.

Advantageously, the caliper body and the mold of the present invention are much more balanced with respect to the products obtained by means of a side injection according to the background art.

Advantageously, the method described allows to employ molds of smaller size with respect to the background art, and to further reduce the cost thereof.

Advantageously, the caliper body of the present invention has a quantity of defects substantially lower with respect to the products according to the background art.

Advantageously, the caliper body of the present invention may be produced with equipment which is not more costly than the current molding machines. Indeed, according to a further advantageous aspect, the present caliper body may be produced with a smaller press, with a size equal to that of a traditional caliper body.

Advantageously, the precaution of placing the injection channel inside the perimeter of the caliper body, allows an important reduction of the force necessary to keep the mold closed during the injection step, and the consequent possibility of molding larger calipers in the current machines without having to forcibly increase the tonnage thereof.

Advantageously, it has been calculated that the method described allows to drastically reduce the molding surface by at least 20-25% with respect to the background art.

Advantageously, the method of the present invention allows to fill the mold quickly and completely in each part of the cavity, for any distance between the inlet of the material in a semi-solid form and the ends of the product to be formed.

Advantageously, the present caliper body is lighter with respect to the corresponding products of the background art.

A skilled in the art, in order to meet specific needs, may introduce changes to the embodiments of the aforesaid method, caliper body and brake caliper, or replace elements with others, functionally equivalent.

Also such variants are contained within the scope of protection as defined by the following claims.

Furthermore, each variant described as belonging to a possible embodiment is feasible independently from the other described variants.

## Claims

1. A method for making a caliper body (10, 10') of a brake caliper;
wherein the caliper body (10, 10') comprises a couple of opposite side portions (2, 4) defining an intermediate plane (X) therebetween and delimiting a space (6) for housing at least part of the braking surfaces of a disc brake (100), in a straddling arrangement of said body (10) on said brake (100), and at least one connecting portion (8, 32, 34) extending over the housing space (6) to join the side portions (2, 4); each side portion (2, 4) delimits one or more cylinders (20) configured to house one or more mobile pistons (22) for moving a support plate (24) for a friction material (26), with respect to a braking surfaces of a disc brake (100);
said method comprising the steps of:
i) providing half-molds (102, 104, 106) jointly delimiting a mold cavity (108), of a complementary shape to the caliper body (10, 10'), adapted to receive a melted material in a semi-solid form by means of an access opening (110) arranged so as to end at the connecting portion (8, 32, 34), in the vicinity of the plane (X); said connecting portion (8, 32, 34) extends over the housing space 6; and said connecting portion (8, 32, 34) is made, alternatively in one piece with the caliper body (10); or in at least two half-portions, each associated with a different half-body (36, 38) of the caliper body (10');
ii) by means of the access opening (110), introducing the melted semi-solid material in the mold cavity (108) by injecting under pressure the semi-solid material.

2. A method according to the preceding claim, wherein the caliper body (10) is made in one piece.

3. A method according to claim 1, wherein the caliper body (10') is made of at least two half-bodies (36, 38), joined one another by force and/or by shape.

4. A method according to any one of the preceding claims, wherein the caliper body (10, 10') extends in longitudinal direction (L) between an inlet end (12) and an outlet end (14) of the disc brake (100), and wherein the connecting portion (8, 32, 34) - and therefore the access opening (110) - is arranged in an intermediate position or substantially central between said ends (12, 14).

5. A method according to any one of the preceding claims, wherein the caliper body (10, 10') extends in longitudinal direction (L) between an inlet end (12) and an outlet end (14) of the disc brake (100), and comprises at least one or at least two connecting portions (32, 34) in the end position, at the inlet end (12) and/or at the outlet end (14), at one of which the access opening is positioned (110).

6. A method according to any one of the preceding claims, wherein the half-molds (102, 104, 106) comprise one or more internal protrusions which, arranged downstream of the access opening (110) in the transit direction (D) of the semi-solid material, form one or more constrictions of the transit section configured to increase the speed flow of said material along the connecting portion (8, 32, 34), so as to completely fill the mold cavity (108) of both side portions (2, 4).

7. A method according to any one of the preceding claims, comprising a step of:
iii) solidifying the material of step ii) in a raw body (1).

8. A method according to the preceding claim, wherein the access opening (110) is oriented with respect to the raw body (1) so as to lie at least partially in the intermediate plane (X).

9. A method according to claims 6 and 7 or 8, wherein, at the end of step iii), said one or more protrusions leave on the raw body (1) one or more body through-holes (16, 18, 16', 18') delimited by the solidified material, achieving structural lightenings of the caliper body (10, 10').

10. A method according to any one of the preceding claims, wherein each side portion (2, 4) delimits one or more cylinders (20) configured to house one or more mobile pistons (22) for moving a support plate (24) for a friction material (26), with respect to the braking surfaces of the disc brake (100).

11. A method according to any one of the preceding claims, wherein step i) comprises a step of providing two or three half-molds (102, 104, 106), at least one or two of which is/are movable to open the mold cavity (108).

12. A method according to claim 7, comprising steps of: iv) extracting the raw body (1) from the mold cavity (108).

13. A method according to claim 12, comprising steps of: working said raw body (1) to obtain the caliper body (10, 10').

14. A method according to the preceding claim, wherein the raw body (1) of step iii) comprises at least one material appendix (28) of a shape complementary to an introduction or injection duct (112) proximal to the access opening (110), for example of a frustoconical shape, said appendix (28) being removed during the step iv) to obtain the caliper body (10, 10').

15. A method according to any one of claims 13 to 14, wherein the step iv) comprises one or more steps of working the raw body (1) by means of chip removal operations, and/or by means of at least one cutting step.

16. A caliper body (10, 10') of a brake caliper (50, 50'), made in one piece, or in at least two half-bodies (36, 38) joined one another by shape and/or force, by means of the method according to any one of the preceding claims.

17. A brake caliper (50, 50') comprising a caliper body (10, 10') according to the preceding claim, and a friction material (26) supported by a support plate (24) arranged at each side portion (2, 4).

## Patentansprüche

1. Verfahren zur Herstellung eines Bremssattelkörpers (10, 10') eines Bremssattels;
wobei der Bremssattelkörper (10, 10') ein Paar gegenüberliegender Seitenteile (2, 4) umfasst, die eine Zwischenebene (X) dazwischen definieren und einen Gehäuseraum (6) zur Aufnahme mindestens eines Teils der Bremsflächen einer Scheibenbremse (100) begrenzen, in einer übergreifenden Anordnung des Körpers (10) auf der Bremse (100), und mindestens einen Verbindungsabschnitt (8, 32, 34), der sich über den GehäuseGehäuseraum (6) erstreckt, um die Seitenteile (2, 4) zu verbinden; jeder Seitenteil (2, 4) begrenzt einen oder mehrere Zylinder (20), die so konfiguriert sind, dass sie einen oder mehrere bewegliche Kolben (22) zur Bewegung einer Trägerplatte (24) für ein Reibmaterial (26) in Bezug auf eine Bremsflächen einer Scheibenbremse (100) aufnehmen;
Das Verfahren umfasst die folgenden Schritte:
i) Bereitstellung von Halbformen (102, 104, 106), die gemeinsam einen Formhohlraum (108) begrenzen, der komplementär zum Bremssattelkörper (10, 10') geformt ist und zur Aufnahme eines geschmolzenen Materials in halbfester Form durch eine Zugangsöffnung (110) geeignet ist, die so angeordnet ist, dass sie am Verbindungsabschnitt (8, 32, 34) in der Nähe der Piane (X) endet;
Der Verbindungsabschnitt (8, 32, 34) erstreckt sich über den Gehäuseraum 6; und der Verbindungsabschnitt (8, 32, 34) ist alternativ einstückig mit dem Bremssattelkörper (10) oder in mindestens zwei Halbteilen, die jeweils einem anderen Halbkörper (36, 38) des Bremssattelkörpers (10') zugeordnet sind, hergestellt.
ii) durch die Zugangsöffnung (110) wird das geschmolzene halbfeste Material in den Formhohlraum (108) eingeführt, indem das halbfeste Material unter Druck eingespritzt wird.

2. Verfahren nach dem vorhergehenden Anspruch, wobei der Bremssattelkörper (10) einstückig hergestellt wird.

3. Verfahren nach Anspruch 1, wobei der Bremssattelkörper (10') aus mindestens zwei Halbkörpern (36, 38) besteht, die durch Kraft und/oder Form miteinander verbunden sind.

4. Verfahren nach einem der vorhergehenden Ansprüche, wobei sich der Bremssattelkörper (10, 10') in Längsrichtung (L) zwischen einem Einlassende (12) und einem Auslassende (14) der Scheibenbremse (100) erstreckt und wobei der Verbindungsabschnitt (8, 32, 34) - und damit die Zugangsöffnung (110) - in einer Zwischenposition oder im Wesentlichen mittig zwischen den Enden (12, 14) angeordnet ist.

5. Verfahren nach einem der vorhergehenden Ansprüche, wobei sich der Bremssattelkörper (10, 10') in Längsrichtung (L) zwischen einem Einlassende (12) und einem Auslassende (14) der Scheibenbremse (100) erstreckt und mindestens einen oder mindestens zwei Verbindungsabschnitte (32, 34) in der Endposition, am Einlassende (12) und/oder am Auslassende (14) umfasst, an einem von denen die Zugangsöffnung (110) positioniert ist.

6. Verfahren nach einem der vorhergehenden Ansprüche, wobei die Halbformen (102, 104, 106) einen oder mehrere innere Vorsprünge aufweisen, die stromabwärts der Zugangsöffnung (110) in der Durchgangsrichtung (D) des halbfesten Materials angeordnet sind und eine oder mehrere Verengungen des Durchgangsabschnitts bilden, die so konfiguriert sind, dass sie die Strömungsgeschwindigkeit des Materials entlang des Verbindungsabschnitts (8, 32, 34) erhöhen, um den Formhohlraum (108) beider Seitenteile (2, 4) vollständig zu füllen.

7. Verfahren nach einem der vorhergehenden Ansprüche, umfassend einen Schritt, der Folgendes beinhaltet:
iii) Verfestigung des Materials aus Schritt ii) in einem Rohkörper (1).

8. Verfahren nach dem vorhergehenden Anspruch, wobei die Zugangsöffnung (110) in Bezug auf den Rohkörper (1) so ausgerichtet ist, dass sie zumindest teilweise in der Piane (X) liegt.

9. Verfahren nach den Ansprüchen 6 und 7 oder 8, wobei am Ende von Schritt iii) der eine oder die mehreren Vorsprünge auf dem Rohkörper (1) ein oder mehrere Durchgangslöcher (16, 18, 16', 18') hinterlassen, die durch das erstarrte Material begrenzt sind, wodurch strukturelle Erleichterungen des Bremssattelkörpers (10, 10') erzielt werden.

10. Verfahren nach einem der vorhergehenden Ansprüche, wobei jeder Seitenteil (2, 4) einen oder mehrere Zylinder (20) begrenzt, die so konfiguriert sind, dass sie einen oder mehrere bewegliche Kolben (22) zur Bewegung einer Trägerplatte (24) für ein Reibmaterial (26) in Bezug auf die Bremsflächen der Scheibenbremse (100) aufnehmen.

11. Verfahren nach einem der vorhergehenden Ansprüche, wobei Schritt i) einen Schritt umfasst, bei dem zwei oder drei Halbformen (102, 104, 106) bereitgestellt werden, von denen mindestens eine oder zwei beweglich sind, um den Formhohlraum (108) zu öffnen.

12. Verfahren nach Anspruch 7, umfassend die folgenden Schritte:
iv) Entnahme des Rohkörpers (1) aus dem Formhohlraum (108).

13. Verfahren nach Anspruch 12, umfassend die folgenden Schritte:
Bearbeitung des Rohkörpers (1) zur Herstellung des Bremssattelkörpers (10, 10').

14. Verfahren nach dem vorhergehenden Anspruch, wobei der Rohkörper (1) aus Schritt iii) mindestens einen Materialanhang (28) mit einer Form aufweist, die komplementär zu einem Einführungs- oder Injektionskanal (112) in der Nähe der Zugangsöffnung (110) ist, beispielsweise mit einer kegelstumpfförmigen Form, wobei der Materialanhang (28) während des Schritts iv) entfernt wird, um den Bremssattelkörper (10, 10') zu erhalten.

15. Verfahren nach einem der Ansprüche 13 bis 14, wobei der Schritt iv) einen oder mehrere Schritte der Bearbeitung des Rohkörpers (1) mittels Spanabtragungsvorgängen und/oder mittels mindestens eines Schneidschritts umfasst.

16. Ein Bremssattelkörper (10, 10') eines Bremssattels (50, 50'), der in einem Stück oder in mindestens zwei Halbkörpern (36, 38) hergestellt ist, die durch Form und/oder Kraft miteinander verbunden sind, mittels des Verfahrens nach einem der vorhergehenden Ansprüche.

17. Ein Bremssattel (50, 50'), umfassend einen Bremssattelkörper (10, 10') gemäß dem vorhergehenden Anspruch und einem Reibmaterial (26), das von einer Trägerplatte (24) getragen wird, die an jedem Seitenteil (2, 4) angeordnet ist.

## Revendications

1. Procédé de fabrication d'un corps d'étrier (10, 10') d'un étrier de frein ;
dans lequel le corps d'étrier (10, 10') comprend une paire de parties latérales opposées (2, 4) définissant un plan intermédiaire (X) entre elles et délimitant un espace (6) pour loger au moins une partie des surfaces de freinage d'un frein à disque (100), dans une disposition à cheval dudit corps (10) sur ledit frein (100), et au moins une partie de liaison (8, 32, 34) s'étendant sur l'espace de logement (6) pour relier les parties latérales (2, 4) ; chaque partie latérale (2, 4) délimite un ou plusieurs cylindres (20) configurés pour loger un ou plusieurs pistons mobiles (22) destinés à déplacer une plaque de support (24) pour un matériau de friction (26), par rapport à des surfaces de freinage d'un frein à disque (100) ;
ledit procédé comprenant les étapes suivantes :
i) fournir des demi-moules (102, 104, 106) délimitant conjointement une cavité de moule (108), de forme complémentaire au corps d'étrier (10, 10'), adaptée pour recevoir un matériau fondu sous forme semi-solide par une ouverture d'accès (110) disposée de manière à se terminer à la partie de liaison (8, 32, 34), à proximité du piane (X) ;
ladite partie de liaison (8, 32, 34) s'étend sur l'espace de logement 6 ; et ladite partie de liaison (8, 32, 34) est réalisée, alternativement en une seule pièce avec le corps d'étrier (10) ; ou en au moins deux demi-portions, chacune associée à un demi-corps différent (36, 38) du corps d'étrier (10') ;
ii) par l'ouverture d'accès (110), introduire le matériau semi-solide fondu dans la cavité de moule (108) en injectant sous pression le matériau semi-solide.

2. Procédé selon la revendication précédente, dans lequel le corps d'étrier (10) est fabriqué en une seule pièce.

3. Procédé selon la revendication 1, dans lequel le corps d'étrier (10') est constitué d'au moins deux demi-corps (36, 38), assemblés l'un à l'autre par force et/ou par forme.

4. Procédé selon l'une quelconque des revendications précédentes, dans lequel le corps d'étrier (10, 10') s'étend dans la direction longitudinale (L) entre une extrémité d'entrée (12) et une extrémité de sortie (14) du frein à disque (100), et dans lequel la partie de liaison (8, 32, 34) - et donc l'ouverture d'accès (110) - est disposée dans une position intermédiaire ou sensiblement centrale entre lesdites extrémités (12, 14).

5. Procédé selon l'une quelconque des revendications précédentes, dans lequel le corps d'étrier (10, 10') s'étend dans la direction longitudinale (L) entre une extrémité d'entrée (12) et une extrémité de sortie (14) du frein à disque (100), et comprend au moins une ou au moins deux parties de liaison (32, 34) en position finale, à l'extrémité d'entrée (12) et/ou à l'extrémité de sortie (14), à l'une desquelles l'ouverture d'accès est positionnée (110).

6. Procédé selon l'une quelconque des revendications précédentes, dans lequel les demi-moules (102, 104, 106) comprennent une ou plusieurs protubérances internes qui, disposées en aval de l'ouverture d'accès (110) dans la direction de transit (D) du matériau semi-solide, forment une ou plusieurs constrictions de la section de transit configurées pour augmenter la vitesse d'écoulement dudit matériau le long de la partie de liaison (8, 32, 34), de manière à remplir complètement la cavité de moule (108) des deux parties latérales (2, 4).

7. Procédé selon l'une quelconque des revendications précédentes, comprenant une étape de : iii) solidification du matériau de l'étape ii) dans un corps brut (1).

8. Procédé selon la revendication précédente, dans lequel l'ouverture d'accès (110) est orientée par rapport au corps brut (1) de manière à se trouver au moins partiellement dans le piane intermédiaire (X).

9. Procédé selon les revendications 6 et 7 ou 8, dans lequel, à la fin de l'étape iii), lesdites une ou plusieurs protubérances laissent sur le corps brut (1) un ou plusieurs trous traversants (16, 18, 16', 18') délimités par le matériau solidifié, réalisant ainsi des allègements structurels du corps d'étrier (10, 10').

10. Procédé selon l'une quelconque des revendications précédentes, dans lequel chaque partie latérale (2, 4) délimite un ou plusieurs cylindres (20) configurés pour loger un ou plusieurs pistons mobiles (22) destinés à déplacer une plaque de support (24) pour un matériau de friction (26), par rapport aux surfaces de freinage du frein à disque (100).

11. Procédé selon l'une quelconque des revendications précédentes, dans lequel l'étape i) comprend une étape consistant à fournir deux ou trois demi-moules (102, 104, 106), dont au moins un ou deux sont mobiles pour ouvrir la cavité de moule (108).

12. Procédé selon la revendication 7, comprenant les étapes suivantes :
iv) extraction du corps brut (1) de la cavité de moule (108).

13. Procédé selon la revendication 12, comprenant les étapes suivantes :
de traitement dudit corps brut (1) pour obtenir le corps d'étrier (10, 10').

14. Procédé selon la revendication précédente, dans lequel le corps brut (1) de l'étape iii) comprend au moins un appendice matériel (28) de forme complémentaire à un conduit d'introduction ou d'injection (112) proximal à l'ouverture d'accès (110), par exemple de forme tronconique, ledit appendice (28) étant retiré au cours de l'étape iv) pour obtenir le corps d'étrier (10, 10').

15. Procédé selon l'une quelconque des revendications 13 à 14, dans lequel l'étape iv) comprend une ou plusieurs étapes d'usinage du corps brut (1) au moyen d'opérations d'enlèvement de copeaux, et/ou au moyen d'au moins une étape de coupe.

16. Corps d'étrier (10, 10') d'un étrier de frein (50, 50'), fabriqué en une seule pièce ou en au moins deux demi-corps (36, 38) assemblés par forme et/ou par force, selon le procédé de l'une des revendications précédentes.

17. Étrier de frein (50, 50') comprenant un corps d'étrier (10, 10') selon la revendication précédente, et un matériau de friction (26) supporté par une plaque de support (24) disposée sur chaque partie latérale (2, 4).
